# EUROPEAN PATENT APPLICATION

(11) **EP 4 459 425 A1**
(43) Date of publication of application: **06.11.2024**
(21) Application number: 21969960.0
(22) Date of filing: 28.12.2021
(51) Int. Cl.: G06F 3/01

(54) **OPERATION DEVICE AND OPERATION SYSTEM**

(71) Applicant: Sony Interactive Entertainment Inc., Tokyo 108-0075 (JP)
(72) Inventor: HIRATA Shinichi, Tokyo 108-0075 (JP); NAKAMURA Hitoshi, Tokyo 108-0075 (JP); MACHIDA Yuuichi, Tokyo 108-0075 (JP); KURONUMA Toru, Tokyo 108-0075 (JP); KUJI Takuya, Tokyo 108-0075 (JP); OMORI Maito, Tokyo 108-0075 (JP); ANDO Toshiyuki, Tokyo 108-0075 (JP); UEDA Yumi, Tokyo 108-0075 (JP); ASANO Takeshi, Tokyo 108-0075 (JP)
(74) Representative: Müller Hoffmann & Partner
(86) International application number: PCT/JP2021/048754
(87) International publication number: WO 2023/127078

(57) **Abstract**

Disclosed is an operation device (6, 7) that includes a mounting section (61), a first position detection section (621), and a stimulus generation section (64, 64A). The mounting section is attached to a hand and fingers of a user. The first position detection section is disposed on the mounting section to detect the positions of the fingers. The stimulus generation section is disposed on the mounting section, placed at a position corresponding to one of the user's fingers, and configured to apply an external stimulus to the user.

## Description

### [Technical Field]

The present invention relates to an operation device and an operation system.

### [Background Art]

In the past, a hand puppet manipulation system that includes a puppet operation device and a control module (refer, for example, to PTL 1) has been known. The puppet operation device is mounted inside a hand puppet to operate the hand puppet. The control module remotely controls the puppet operation device.

The control module included in the hand puppet manipulation system described in PTL 1 is used while being fitted in a hand of a user, and includes a data glove that detects the movement of the user's hand. The data glove includes multiple types of sensors for measuring physical quantities that vary with the movement of the user's hand. Data concerning physical quantities measured by the data glove is transmitted to a conversion module, and converted to various control signals by the conversion module. The control signals resulting from conversion are transmitted to the puppet operation device. The puppet operation device then operates the hand puppet according to the control signals.

### [Citation List]

### [Patent Literature]

[PTL 1]
Japanese Patent Laid-open No. 2010-89248

### [Summary]

### [Technical Problem]

In recent years, there has been a demand for a more realistic operational feeling.

However, the hand puppet manipulation system described in PTL 1 has a problem in that the user operating the control module is unable to sense the stimulus applied to the puppet operation device.

### [Solution to Problem]

According to a first aspect of the present invention, there is provided an operation device including a mounting section, a first position detection section, and a stimulus generation section. The mounting section is attached to a hand and fingers of a user. The first position detection section is disposed on the mounting section to detect the positions of the user's fingers. The stimulus generation section is disposed on the mounting section, placed at a position corresponding to one of the user's fingers, and configured to apply an external stimulus to the user.

According to a second aspect of the present invention, there is provided an operation system that includes an operation device according to the first aspect and an operation target. The operation target operates according to operation information based on the result of detection by the first position detection section.

### [Brief Description of Drawings]

[FIG. 1]

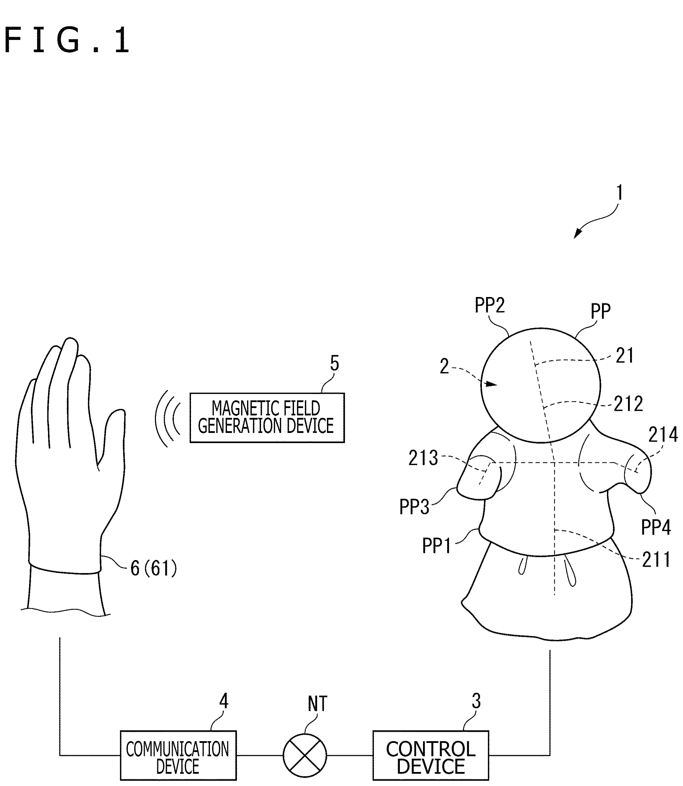

   FIG. 1 is a schematic diagram illustrating an outline configuration of an operation system according to a first embodiment.
[FIG. 2]

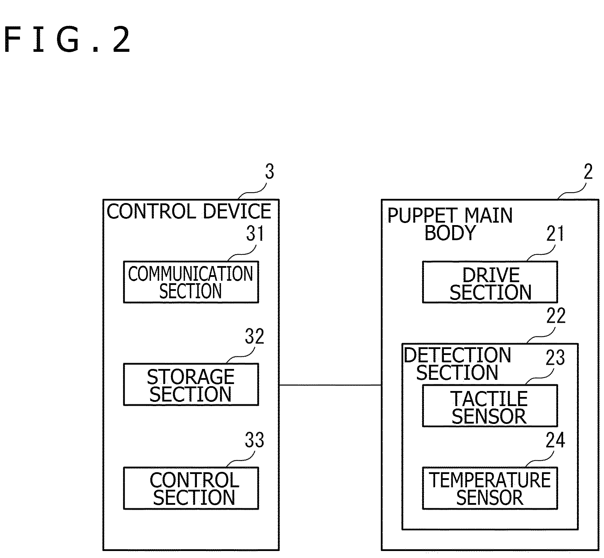

   FIG. 2 is a block diagram illustrating a configuration of a puppet main body and a configuration of a control device according to the first embodiment.
[FIG. 3]

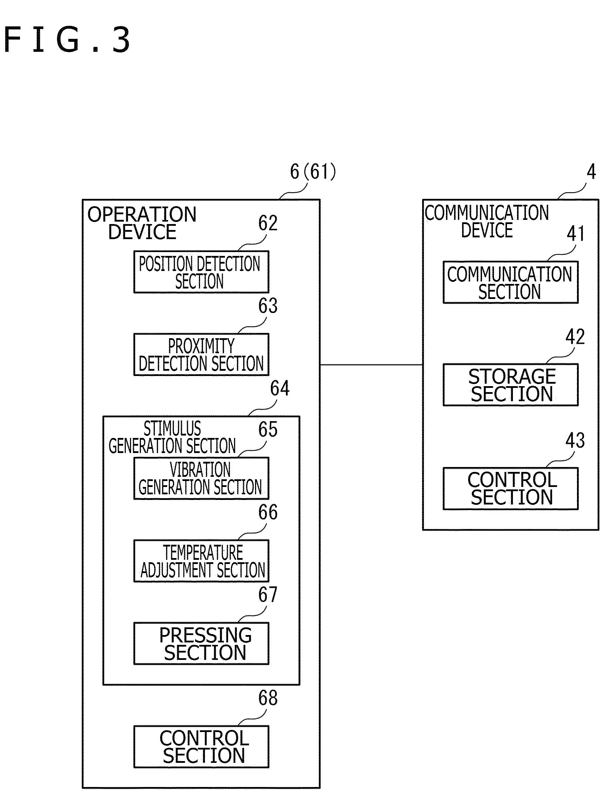

   FIG. 3 is a block diagram illustrating a configuration of a communication device and a configuration of an operation device according to the first embodiment.
[FIG. 4]

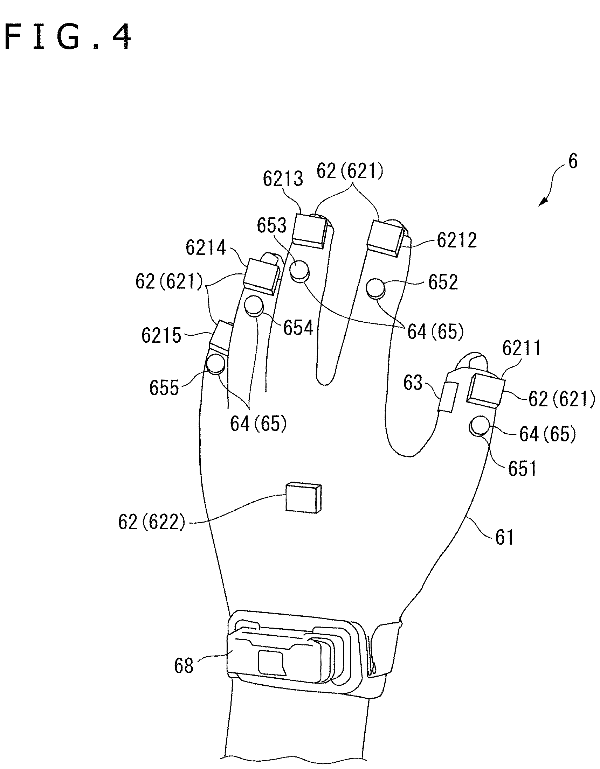

   FIG. 4 is a perspective view schematically illustrating the operation device according to the first embodiment.
[FIG. 5]

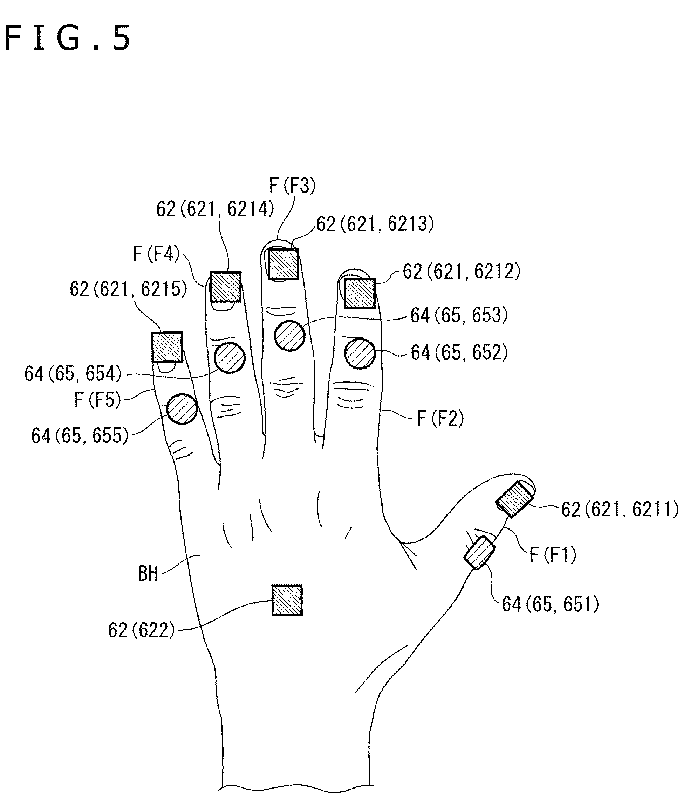

   FIG. 5 is a schematic diagram illustrating a positional relation between a hand of a user, a position/posture detection section, and a vibration generation section according to the first embodiment.
[FIG. 6]

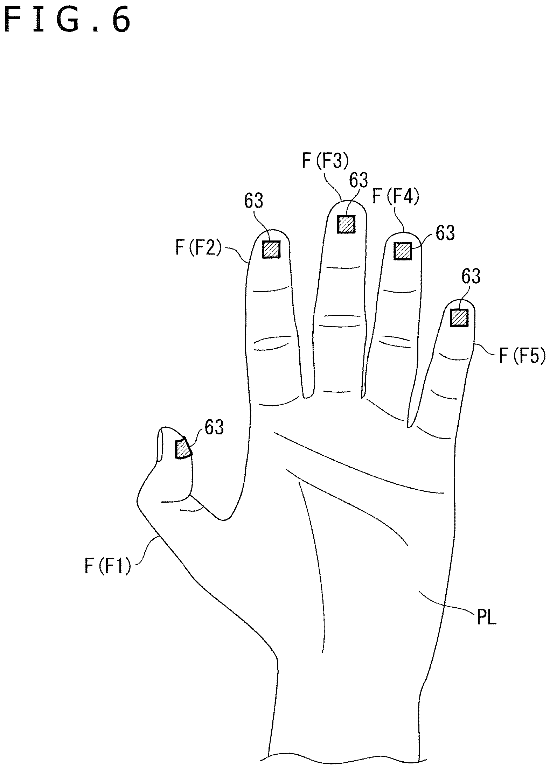

   FIG. 6 is a schematic diagram illustrating a positional relation between the user's hand and a proximity detection section according to the first embodiment.
[FIG. 7]

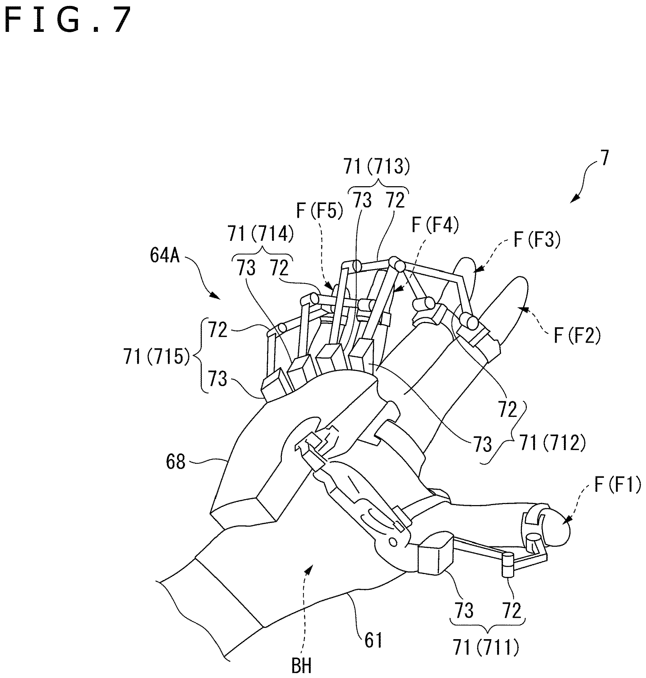

   FIG. 7 is a perspective view schematically illustrating the operation device included in the operation system according to a second embodiment.

### [Description of Embodiments]

### [First Embodiment]

A first embodiment of the present invention will now be described with reference to the accompanying drawings.

### [Outline Configuration of Operation System]

FIG. 1 is a schematic diagram illustrating an outline configuration of an operation system 1 according to the first embodiment.

As depicted in FIG. 1, the operation system 1 according to the present embodiment includes a puppet main body 2, a control device 3, a communication device 4, a magnetic field generation device 5, and an operation device 6. The puppet main body 2 is attached to a puppet PP. In the operation system 1, the operation device 6 remotely controls the puppet main body 2 through the control device 3 and the communication device 4, and causes a user to perceive a stimulus detected by the puppet main body 2.

It should be noted that the puppet PP is a hollow doll having a torso PP1, a head PP2, a right arm PP3, and a left arm PP4, and is made, for example, by cloth.

Further, the magnetic field generation device 5 generates a magnetic field that is detected by a later-described position/posture detection section 62 of the operation device 6.

### [Configuration of Puppet Main Body]

The puppet main body 2 is an operation target to be operated by the operation device 6. The puppet main body 2 is inserted into the puppet PP to operate the puppet PP. Further, the puppet main body 2 can be said to be an operation device that is operated by a user other than the user using the operation device 6 for the purpose of applying an external stimulus to the user through the operation device 6.

As depicted in FIG. 1, the puppet main body 2 includes a drive section 21.

The drive section 21 operates according to a control signal inputted from the control device 3. The drive section 21 operates the head PP2, the right arm PP3, and the left arm PP4. The drive section 21 includes a support section 211, a head drive section 212, a right-arm drive section 213, and a left-arm drive section 214.

The support section 211 is provided in correspondence with the torso PP1 to support the head drive section 212, the right-arm drive section 213, and the left-arm drive section 214.

The head drive section 212 bends or extends the head PP2. The right-arm drive section 213 bends or extends the right arm PP3. The left-arm drive section 214 bends or extends the left arm PP4. The drive sections 212 to 214 may be exemplified as having a plurality of links and a motor. The plurality of links are configured to be bendable with respect to each other. The motor is configured to operate the plurality of links.

FIG. 2 is a block diagram illustrating a configuration of the puppet main body 2 and a configuration of the control device 3.

As depicted in FIG. 2, the puppet main body 2 includes a detection section 22.

The detection section 22 detects a stimulus acting on the puppet main body 2, and outputs the result of detection to the control device 3. The detection section 22 includes a tactile sensor 23 and a temperature sensor 24.

The tactile sensor 23 detects proximity of an object without contact. Further, when the object comes into contact with the tactile sensor 23, the tactile sensor 23 detects the pressure applied to the object. Stated differently, the tactile sensor 23 detects the pressure exerted by the object brought into contact with the tactile sensor 23. The tactile sensor 23 provided, for example, for the puppet main body 2 is placed at a position corresponding to each of the torso PP1, the head PP2, the tip of the right arm PP3, and the tip of the left arm PP4. The tactile sensor 23 transmits the result of detection to the control device 3. It should be noted that the tactile sensor 23 functions as a proximity sensor for detecting the proximity of an object, and additionally functions as a pressure sensor for detecting a pressure. However, the tactile sensor 23 need not necessarily have such two functions. The tactile sensor 23 may have either the function of the proximity sensor or the function of the pressure sensor. Furthermore, at least either the proximity sensor or the pressure sensor may be provided instead of the tactile sensor 23.

The temperature sensor 24 detects a temperature. The temperature sensor 24 provided, for example, for the puppet main body 2 is placed at a position corresponding to each of the torso PP1, the head PP2, the right arm PP3, and the left arm PP4, and transmits the detected temperature to the control device 3.

### [Configuration of Control Device]

The control device 3 controls the operation of the puppet main body 2. Specifically, the control device 3 drives the drive section 21 according to operation information received from the communication device 4, in order to operate the puppet main body 2 and thus operate the puppet PP. As depicted in FIG. 2, the control device 3 includes a communication section 31, a storage section 32, and a control section 33.

The communication section 31 not only communicates with the puppet main body 2, but also communicates with the communication device 4 through a network NT. Under the control of the control section 33, the communication section 31 not only outputs the operation information, which is received from the communication device 4, to the control section 33, but also transmits detected information, which indicates the result of detection by the detection section 22 of the puppet main body 2, to the communication device 4. It should be noted that the communication section 31 may be connected to the puppet main body 2 by wire or by a communication method compliant with wireless communication standards such as Bluetooth (registered trademark) and IEEE (Institute of Electrical and Electronics Engineers) 802.11.

The storage section 32 stores programs and data necessary for the operation of the control device 3. For example, the storage section 32 stores information regarding the connection to the communication device 4, information indicating the type of the puppet main body 2, and an operation program for operating the puppet main body 2 according to the received operation information.

The control section 33 includes an arithmetic processing circuit such as a CPU (Central Processing Unit), and controls the operation of the puppet main body 2 according to a program stored in the storage section 32. Specifically, the control section 33 transmits to the puppet main body 2 through the communication section 31 a control signal for operating the drive section 21 of the puppet main body 2 according to the operation information received from the communication device 4. Further, the control section 33 causes the communication section 31 to transmit the detected information which indicates the result of detection by the detection section 22 of the puppet main body 2, to the communication device 4.

### [Configuration of Communication Device]

FIG. 3 is a block diagram illustrating a configuration of the communication device 4 and a configuration of the operation device 6.

As depicted in FIG. 1, the communication device 4 not only transmits the operation information based on an operation signal inputted from the operation device 6, but also operates the operation device 6 according to the detected information received from the control device 3. That is, the communication device 4 acts as an operation device control device that controls some component elements included in the operation device 6. As depicted in FIG. 3, the communication device 4 includes a communication section 41, a storage section 42, and a control section 43.

The communication section 41 not only communicates with the operation device 6, but also communicates with the control device 3 through the network NT. Under the control of the control section 43, the communication section 41 not only outputs the detected information, which is received from the control device 3, to the control section 43, but also transmits the operation information, which is based on the operation signal received from the operation device 6, to the control device 3. It should be noted that the communication section 41 may be connected to the operation device 6 by wire or by a communication method compliant with wireless communication standards such as Bluetooth (registered trademark) and IEEE 802.11.

The storage section 42 stores programs and data necessary for the operation of the communication device 4. For example, the storage section 42 stores a conversion program for converting the operation signal received from the operation device 6 to operation information suitable for causing the control device 3 to operate the puppet main body 2. Further, for example, the storage section 42 stores connection information for connecting to the control device 3 that controls the puppet main body 2, which is an operation target to be operated by the operation device 6. Therefore, in a case where multiple pairs of control device 3 and puppet main body 2 are connected to the network NT, the storage section 42 stores the connection information for each control device 3.

The control section 43 converts the operation signal which is received from the operation device 6 to the above-mentioned operation information according to the conversion program, and causes the communication section 41 to transmit the operation information to the control device 3. Further, the control section 43 generates a control signal for operating the operation device 6 according to the detected information which is received from the control device 3 by the communication section 41, and transmits the generated control signal to the operation device 6 in order to control some component elements included in the operation device 6.

### [Configuration of Operation Device]

The operation device 6 remotely controls the puppet main body 2. Specifically, the operation device 6 detects the movement of the user, transmits an operation signal corresponding to the detected movement of the user to the communication device 4, and causes the communication device 4 and the control device 3 to operate the puppet main body 2. In the present embodiment, the operation device 6 detects the movement of a hand and fingers of the user. Further, the operation device 6 applies an external stimulus to the user in response to a control signal that is received from the communication device 4 according to the result of detection by the detection section 22 of the puppet main body 2.

FIG. 4 is a perspective view schematically illustrating the operation device 6.

As depicted in FIG. 4, the operation device 6 includes a mounting section 61 that is attached to one hand of the user. The mounting section 61 is shaped like a glove and worn on the fingers of one hand of the user. Therefore, the user can also wear a puppet similar to the puppet PP on the user's hand so as to cover the outside of the operation device 6 while wearing the operation device 6 on the user's hand. The mounting section 61 is preferably formed by a stretchable material that can be firmly attached to the user's hand.

FIG. 5 is a schematic diagram illustrating a positional relation between the user's hand, the position/posture detection section 62, and a vibration generation section 65. As depicted in FIG. 3, the operation device 6 includes the position/posture detection section 62, a proximity detection section 63, a stimulus generation section 64, and a control section 68 in addition to the mounting section 61.

The position/posture detection section 62 is disposed on the mounting section 61 to detect the movement of the user's hand and fingers. As depicted in FIGS. 4 and 5, the position/posture detection section 62 includes a plurality of first position detection sections 621 and a second position detection section 622. The plurality of first position detection sections 621 are disposed for the individual fingers F. The second position detection section 622 is disposed at a position other than those of the fingers F of the user's hand.

The plurality of first position detection sections 621 are disposed on the mounting section 61, provided in correspondence with the fingertips of the individual fingers F, and positioned on the nail side of the individual fingers F. Specifically, as depicted in FIG. 5, the first position detection sections 621 are provided for the individual fingers F to detect the positions of the first position detection sections 621 as the positions of the fingertips of the fingers F, which are detection targets. The plurality of first position detection sections 621 include first position detection sections 6211 to 6215.

The first position detection section 6211 is disposed on a first finger F1 (thumb), the first position detection section 6212 is disposed on a second finger F2 (index finger), the first position detection section 6213 is disposed on a third finger F3 (middle finger), the first position detection section 6214 is disposed on a fourth finger F4 (ring finger), and the first position detection section 6215 is disposed on a fifth finger F5 (little finger).

The second position detection section 622 is disposed on the mounting section 61, positioned in correspondence with the back of the hand BH, and configured to detect the position of the second position detection section 622 as the position of the back of the hand BH.

In the present embodiment, the first position detection sections 621 and the second position detection section 622 each include a magnetic sensor whose resistance value varies with the strength and direction of the magnetic field that is generated outside the operation device 6 by the magnetic field generation device 5, which is a transmitter. Then, the position detection sections 621 and 622 each calculate the position and the posture, which are calculated on the basis of the result of detection by the magnetic sensor, as the position and the posture of the corresponding finger, and thus as the position and the posture of the hand and fingers.

FIG. 6 is a schematic diagram illustrating a positional relation between the user's hand and the proximity detection section 63.

The proximity detection section 63 is disposed on the mounting section 61 to detect the proximity of an object relative to the user's hand and fingers. Specifically, as depicted in FIGS. 4 and 6, the proximity detection section 63 is formed by a proximity sensor that is disposed on the outer surface of the mounting section 61 and positioned on the ball side of the fingertip of each finger F. That is, the proximity detection section 63 disposed on the mounting section 61 is placed at a position corresponding to the ball of the fingertip of each finger F, which is a detection target. When the user attempts to grasp an object with the fingers F of the hand wearing the operation device 6, the proximity detection section 63 detects whether or not the object is brought into contact with the fingers, that is, whether or not the hand wearing the operation device 6 has grasped the object.

In the present embodiment, the proximity sensor forming the proximity detection section 63 is provided for each of the user's fingers F1-F5. However, the proximity sensor may alternatively be provided on the palm PL and the back of the hand BH instead of the fingers F1-F5 or in addition to the fingers F1-F5. Another alternative is to provide the above-described tactile sensor instead of the proximity sensor.

The stimulus generation section 64 depicted in FIG. 3 is disposed on the mounting section 61, and configured to operate based on a control signal received from the communication device 4, in order to apply an external stimulus to the user. That is, the stimulus generation section 64 artificially reproduces the stimulus to the puppet PP according to the control signal based on the result of detection by the detection section 22, which detects a stimulus acting on the puppet main body 2.

The stimulus generation section 64 includes the vibration generation section 65, a temperature adjustment section 66, and a pressing section 67.

The vibration generation section 65 applies a vibration to the user to create an illusion causing the user to feel as if an object is brought into contact with the user's hand and fingers. A plurality of vibration generation sections 65 may each include, for example, a voice coil motor.

In the present embodiment, as depicted in FIGS. 4 and 5, the vibration generation section 65 includes vibration generation sections 651 to 655 that are disposed on the mounting section 61 and placed at positions corresponding to the individual fingers.

The vibration generation section 651 is disposed on the mounting section 61 and placed at a position between the first joint of the first finger F1 and the joint at the base of the first finger.

The vibration generation sections 652 to 655 are disposed on the mounting section 61 and placed at positions corresponding to the second finger F2, the third finger F3, the fourth finger F4, and the fifth finger F5. More specifically, the vibration generation sections 652 to 655 are disposed on the mounting section 61 and placed at positions between the first and second joints of the fingers F2 to F5.

When a vibration is directly applied to a fingertip in the above situation, the user is likely to have the illusion that an object is brought into contact with the fingertip to which the vibration is applied. However, disposing the vibration generation sections 65, which are relatively large in size, on the fingertips is difficult and reduces the operability of the operation device 6. The operation device 6 according to the present embodiment is configured such that the proximity detection section 63 and the temperature adjustment section 66 are disposed on the fingertips. Therefore, a space for disposing the vibration generation sections 65 cannot easily be provided at the fingertips.

Meanwhile, the vibration generation section 651 in the present embodiment is disposed at a position between the first joint of the first finger F1 and the joint at the base of the first finger, and the vibration generation sections 652 to 655 are disposed at positions between the first and second joints of each of the second finger F2, the third finger F3, the fourth finger F4, and the fifth finger F5.

Consequently, when a vibration is generated, for example, by the vibration generation section 652, the vibration is transmitted to the fingertip of the second finger F2, giving the user the illusion that the vibration is directly applied to the fingertip of the second finger F2. As described above, the vibration generation sections 651 to 655 can be disposed at positions other than the fingertips. As a result, a vibration can be applied to the fingertip of each finger F.

The temperature adjustment section 66 depicted in FIG. 3 is disposed on the mounting section 61, placed at positions corresponding to the hand and fingers, and configured to give the user a warm sensation and a cool sensation. Although detailed illustrations are omitted, the temperature adjustment section 66 is disposed on the mounting section 61 and placed, for example, at a position corresponding to the fingertip of each finger F, at a position corresponding to the palm PL, and at a position corresponding to the back of the hand BH. The temperature adjustment section 66 is positioned inside the mounting section 61. The temperature adjustment section 66 may be formed, for example, by a thermoelectric conversion element such as a Peltier element.

The pressing section 67 is disposed on the mounting section 61, placed at positions corresponding to the hand and fingers, and configured to press the user's hand and fingers. Although not depicted, the pressing section 67 is disposed on the mounting section 61 and placed at positions corresponding to the fingers F, at a position corresponding to the palm PL, and at a position corresponding to the back of the hand BH. More specifically, five out of a plurality of pressing sections 67, which are provided for the fingers F, are placed at positions corresponding to the fingertips of the fingers to be pressed, and configured to press the fingertips of the fingers F. It should be noted that the plurality of pressing sections 67 disposed on the mounting section 61 may be placed at positions corresponding to the palm PL and at positions corresponding to the back of the hand BH. Examples of the pressing section 67 may include a combination of an air pump and a silicone air chamber that is expanded or contracted by a gas supplied from the air pump, or a combination of a piezoelectric element and a pressing piece that is moved by the piezoelectric element to press the hand and fingers.

The control section 68 controls the operation of the operation device 6. The control section 68 is electrically connected to the position/posture detection section 62, the proximity detection section 63, and the stimulus generation section 64. The control section 68 not only transmits an operation signal indicating the position and the posture of the hand and fingers, which are detected by the position/posture detection section 62, to the communication device 4, but also transmits a detection signal, which indicates the result of detection by the proximity detection section 63, to the communication device 4. Further, the control section 68 operates the vibration generation section 65, the temperature adjustment section 66, and the pressing section 67 of the stimulus generation section 64 according to the control signal received from the communication device 4.

In the present embodiment, as depicted in FIG. 5, the control section 68 is disposed on the mounting section 61 and placed at a position corresponding to the wrist of the user.

### [Advantages of the First Embodiment]

The operation system 1 according to the present embodiment, which has been described above, provides the following advantages.

The operation system 1 includes the operation device 6 and the puppet main body 2, which operates according to the operation information based on the result of detection by the first position detection sections 621 of the operation device 6. The puppet main body 2 corresponds to the operation target.

The operation device 6 includes the mounting section 61, the first position detection sections 621, and the stimulus generation section 64. The mounting section 61 is attached to the user's hand and fingers. The first position detection sections 621 are disposed on the mounting section 61 to detect the positions of the corresponding fingers F. The stimulus generation section 64 is disposed on the mounting section 61, placed at a position corresponding to one of the user's fingers F, and configured to apply an external stimulus to the user.

The configuration described above enables the first position detection sections 621 to detect the positions of the fingers F of the user wearing the operation device 6 and the postures of the fingers F. Further, the stimulus generation section 64 is able to apply an external stimulus to the user's fingers F. Therefore, based on the positions and the postures of the fingers F, which are detected by the first position detection sections 621, the external stimulus can be applied to the fingers F targeted for detection by the first position detection sections 621 or applied to the other fingers F. This increases the versatility of the operation device 6. Furthermore, the operation system 1 can be configured such that the operation target (e.g., the puppet main body 2) can be operated by the operation device 6, and that a stimulus externally applied to the operation target can be fed back to the user.

The operation device 6 is configured such that the first position detection sections 621 are disposed on the mounting section 61 and positioned on the nail side of the user's fingertips.

The configuration described above eliminates the necessity of providing the first position detection sections 621 at the fingertips of the fingers F targeted for detection by the first position detection sections 621. Therefore, a higher degree of freedom can be provided for the fingertips targeted for position detection than in a case where the first position detection sections 621 are provided in correspondence with the fingertips of the fingers F targeted for position detection.

The operation device 6 is configured such that the stimulus generation section 64 includes the vibration generation section 65. The vibration generation sections 652 to 655, which are included in the vibration generation section 65 disposed on the mounting section 61, are positioned between the first and second joints of the corresponding fingers to generate a vibration.

In a case where the vibration is generated by the vibration generation sections 652 to 655, which are positioned as described above, the configuration described above makes it possible to transmit the vibration to the fingertips of the corresponding fingers F. Consequently, the same illusion can be given to the user as in the case of direct vibration of the fingertips. This eliminates the necessity of providing the vibration generation section 65 at the fingertips. Therefore, a higher degree of freedom can be provided for the fingertips than in a case where the vibration generation section 65 is disposed at the fingertips.

The operation device 6 includes the proximity detection section 63, which is disposed on the mounting section 61, positioned on the ball side of the user's fingertips, and configured to detect the proximity of an object.

The configuration described above enables the proximity detection section 63 to accurately detect the proximity of an object relative to the user's fingertips.

The operation device 6 is configured such that the stimulus generation section 64 includes the temperature adjustment section 66, which is able to adjust the temperature.

The configuration described above makes it possible to give the user a cool sensation and a warm sensation. Consequently, the versatility of the operation device 6 can be increased, so that the user operating the operation device 6 is able to perceive the temperature indicative of contact between the operation target and another user or an object.

The operation device 6 is configured such that the stimulus generation section 64 includes the pressing section 67, which presses the user's hand and fingers.

The configuration described above enables the pressing section 67 to apply a reaction force to the user when the user grasps an object, and give the user a tactile sensation as if the user's hand is touched by another person.

The operation device 6 includes the second position detection section 622, which is disposed on the mounting section 61, placed at a position corresponding to the back of the user's hand BH, and configured to detect the position of the back of the hand BH.

The configuration described above enables the second position detection section 622 to detect the movement of turning the user's wrist. Consequently, the user's hand movements can be detected in detail.

The operation device 6 is configured such that the mounting section 61 is shaped like a glove that is worn on the user's hand and fingers.

The configuration described above ensures that the operation device 6 can easily be worn on the user's hand.

The operation device 6 is configured such that the first position detection sections 621 include the magnetic sensor, which detects an externally generated magnetic field. The same applies to the second position detection section 622.

The configuration described above makes it possible to detect the positions of the fingers F without interfering with the movement of the fingers F compared to the case where, for example, the first position detection sections 621 include an exoskeleton attached to the finger F and a movement amount detection device configured to detect the amount of movement of the exoskeleton.

The operation device 6 includes the control section 68, which is disposed on the mounting section 61, placed at a position corresponding to the user's wrist, and configured to control the stimulus generation section 64.

The configuration described above makes it possible to dispose the control section 68 at a position where hand movements are unlikely to be interfered with. This suppresses a decrease in the degree of freedom of the user's hand and fingers.

### [Second Embodiment]

A second embodiment of the present invention will now be described.

The operation system according to the second embodiment is similar in configuration to the operation system 1 according to the first embodiment. However, there are some differences in configuration between the operation system according to the second embodiment and the operation system according to the first embodiment. Incidentally, in the following description, parts identical or substantially identical with already described parts are designated by the same reference signs as the corresponding parts and will not be redundantly described.

FIG. 7 is a schematic diagram illustrating an operation device 7 included in the operation system according to the second embodiment.

The operation system according to the second embodiment has the same configuration and functions as the operation system 1 according to the first embodiment, except that the former includes the operation device 7, which is depicted in FIG. 7, instead of the operation device 6 according to the first embodiment. The operation system according to the second embodiment includes the puppet main body 2 disposed inside the puppet PP, the control device 3, the communication device 4, and the operation device 7.

As is the case with the operation device 6, the operation device 7 communicates with the communication device 4 to remotely control the puppet main body 2, which has been described in conjunction with the first embodiment. The operation device 7 detects the movement of the user's hand and fingers, and transmits to the communication device 4 an operation signal corresponding to the detected movement of the hand and fingers. Additionally, the operation device 7 applies an external stimulus to the user according to a control signal received from the communication device 4.

The operation device 7 has the same configuration and functions as the operation device 6 except that the former includes a stimulus generation section 64A instead of the stimulus generation section 64. That is, the operation device 7 includes the mounting section 61, the position/posture detection section 62, the proximity detection section 63, the stimulus generation section 64A, and the control section 68. In the example of FIG. 7, the control section 68 is disposed on the mounting section 61 and placed at a position corresponding to the back of the hand BH. However, the control section 68 may alternatively be placed at a position corresponding to the user's wrist, as is the case with the control section 68 of the operation device 6 according to the first embodiment.

The stimulus generation section 64A includes a reaction force generation section 71 in addition to the vibration generation section 65, the temperature adjustment section 66, and the pressing section 67, which are similarly included in the stimulus generation section 64 described in conjunction with the first embodiment.

The reaction force generation section 71 generates a reaction force against the movement of the user's hand and fingers, causing the user to feel as if the hand and fingers are in contact with an object. Specifically, the reaction force generation section 71 generates a reaction force that restricts the movement of the user's fingers F, causing the user to feel as if the fingers F is in contact with an object. The reaction force generation section 71 includes a reaction force generation section 711, a reaction force generation section 712, a reaction force generation section 713, a reaction force generation section 714, and a reaction force generation section 715. The reaction force generation section 711 exerts a reaction force on the first finger F1. The reaction force generation section 712 exerts a reaction force on the second finger F2. The reaction force generation section 713 exerts a reaction force on the third finger F3. The reaction force generation section 714 exerts a reaction force on the fourth finger F4. The reaction force generation section 715 exerts a reaction force on the fifth finger F5.

The reaction force generation sections 711-715 each include a link mechanism 72 and a resistance section 73.

The link mechanism 72 connects the resistance section 73 to a finger F on which the reaction force is to be exerted. The link mechanism 72 includes a plurality of links that are bendably connected to each other, and is displaced according to the movement of the connected finger F. One end of the link mechanism 72 is connected to the fingertip of the finger F on which the reaction force is to be exerted, and the other end of the link mechanism 72 is connected to the resistance section 73. For example, one end of the link mechanism 72 of the reaction force generation section 712 that exerts a reaction force on the second finger F2 is connected to the fingertip of the second finger F2, and the other end of the link mechanism 72 of the reaction force generation section 712 is connected to the resistance section 73 of the reaction force generation section 712. As described above, the operation device 7 is a generally-called exoskeleton controller.

Under the control of the control section 68, the resistance section 73 changes the resistance to the displacement of the link mechanism 72, which is displaced according to the movement of the finger F on which the reaction force is to be exerted, and thus exerts the reaction force against the movement of the finger F on the finger F. For example, when the second finger F2 bends, the resistance section 73 of the reaction force generation section 712 makes it difficult to bend the second finger F2 by increasing the resistance to the displacement of the link mechanism 72 that is displaced according to the bending motion of the second finger F2. As a result, the reaction force against the bending motion of the second finger F2 acts on the second finger F2. Therefore, the user is able to recognize the illusion that an object is in contact with the second finger F2.

The operation system according to the second embodiment, which has been described above, is able to provide the same advantages as the operation system 1 according to the first embodiment.

It should be noted that a potentiometer or other displacement amount detection section for detecting the amount of displacement of the link mechanism 72 may be provided in place of the resistance section 73 in order to configure the reaction force generation section 71 as a first position detection section for detecting the position of the finger F targeted for position detection by detecting the movement of the finger F.

### [Modifications of Embodiments]

The present invention is not limited to the foregoing embodiments, but includes modifications and improvements within a range where the purpose of the present invention can be achieved.

In the foregoing embodiments, the position/posture detection section 62 including the first position detection sections 621 and the second position detection section 622 is provided with a magnetic sensor that detects magnetism. However, for the purpose of detecting the position and the posture of the hand and fingers, the position/posture detection section may adopt an alternative method that is not based on the use of a magnetic sensor.

In the foregoing embodiments, the position/posture detection section 62 includes the first position detection sections 621 (6211 to 6215) and the second position detection section 622. The first position detection sections 621 (6211 to 6215) are disposed on the mounting section 61 and placed at positions corresponding to the fingertips of the fingers F targeted for detection. The second position detection section 622 is placed at a position corresponding to the back of the hand BH. However, the present invention is not limited to such configuration, but the position/posture detection section 62 may alternatively include at least one of the first position detection sections 6211 to 6215. Further, the second position detection section 622 need not necessarily be included in the position/posture detection section 62. Additionally, the first position detection sections 621 in the foregoing embodiments are disposed on the mounting section 61 and positioned on the nail side of the fingertips of the fingers F. However, the present invention is not limited to such configuration, but the first position detection sections may be disposed at any positions where the first position detection sections are able to detect the positions of the fingers F.

In the foregoing embodiments, the vibration generation sections 652 to 655 provided for the second finger F2, the third finger F3, the fourth finger F4, and the fifth finger F5 are disposed on the mounting section 61 and positioned between the first and second joints of the individual fingers F. However, the present invention is not limited to such configuration, but the vibration generation sections 652 to 655 may alternatively be placed at other positions. Further, the vibration generation section 65 need not necessarily be provided.

In the foregoing embodiments, the operation devices 6 and 7 include the proximity detection section 63, which is disposed on the mounting section 61 and positioned on the ball side of the user's fingertips. However, the present invention is not limited to such configuration. The proximity detection section 63 need not necessarily be included in the operation devices 6 and 7. Further, the proximity detection section 63, which is disposed on the mounting section 61, need not necessarily be positioned on the ball side of the user's fingertips. The position of the proximity detection section 63 may be changed as appropriate.

In the foregoing embodiments, the stimulus generation section 64 includes the temperature adjustment section 66. That is, the operation devices 6 and 7 in the foregoing embodiments includes the temperature adjustment section 66, which is able to adjust the temperature. However, the present invention is not limited to such a configuration. The temperature adjustment section 66 need not necessarily be included in the operation devices 6 and 7. Further, the position of the temperature adjustment section 66 is not limited to the one described above, but may be different from the above-described one.

In the foregoing embodiments, the stimulus generation section 64 includes the pressing section 67. That is, the operation devices 6 and 7 are provided with the pressing section 67 that presses the user's hand and fingers. However, the present invention is not limited to such configuration. The pressing section 67 need not necessarily be provided. Further, the position of the pressing section 67 is not limited to the one described above, but may be different from the above-described one.

In the foregoing embodiments, the operation devices 6 and 7 is disposed on the mounting section 61, placed at a position corresponding to the back of the user's hand BH, and provided with the second position detection section 622, which detects the position of the back of the hand BH. However, the present invention is not limited to such configuration. The second position detection section 622 need not necessarily be provided.

In the foregoing embodiments, the mounting section 61 is shaped like a glove that is worn on the user's hand and fingers. However, the mounting section 61 need not necessarily be shaped like a glove. The shape of the mounting section 61 may be changed as appropriate as long as the component elements of the operation devices 6 and 7 can be disposed on the mounting section 61. For example, the mounting section 61 may be shaped like a band or may be similar in shape to the puppet PP.

In the foregoing embodiments, the operation device 6 is disposed on the mounting section 61, placed at a position corresponding to the user's wrist, and provided with the control section 68, which controls the stimulus generation section 64. However, the present invention is not limited to such configuration. For example, in a case where the component elements of the operation devices 6 and 7, such as the position/posture detection section 62 and the stimulus generation section 64, are directly connected to the communication device 4, the control section 68 need not necessarily be provided. Further, as is the case with the control section 68 in the operation device 7 according to the second embodiment, the control section 68 may be disposed on the mounting section 61 and placed at a position corresponding to the back of the hand or at another position. That is, the position of the control section 68 may be changed as appropriate, and may be a position other than the user's hand and fingers.

In the foregoing embodiments, the operation system is formed by the operation devices 6 and 7 and the operation target (e.g., the puppet main body 2), which operates according to the operation information based on the result of detection by the position/posture detection section 62. However, the present invention is not limited to such configuration. The operation target of the operation devices 6 and 7 need not necessarily be the puppet main body 2, but may be another component element. The operation target may alternatively be, for example, a robot hand or a manipulator.

In the operation system according to the foregoing embodiments, the operation devices 6 and 7 operate the puppet main body 2 through the control device 3 and the communication device 4, which use the network NT to communicate with the operation devices 6 and 7. However, the present invention is not limited to such configuration. Alternatively, the operation devices 6 and 7 may directly operate the puppet main body 2, which is the operation target.

### [Outline of Present Invention]

The present invention is outlined below.
[1] The operation device includes a mounting section, a first position detection section, and a stimulus generation section. The mounting section is attached to a hand and fingers of a user. The first position detection section is disposed on the mounting section to detect positions of the fingers. The stimulus generation section is disposed on the mounting section, placed at a position corresponding to one of the user's fingers, and configured to apply an external stimulus to the user.

The configuration described above enables the first position detection section to detect the positions of the fingers of the user wearing the operation device and the postures of the fingers. Further, the stimulus generation section is able to apply an external stimulus to the user's fingers. Therefore, based on the positions and the postures of the fingers, which are detected by the first position detection section, the external stimulus can be applied to the fingers targeted for position detection by the first position detection section or applied to the other fingers. This increases the versatility of the operation device.

[2] The operation device described in [1] above may be configured such that the first position detection section is disposed on the mounting section and positioned on a nail side of the user's fingertips.

The configuration described above eliminates the necessity of providing the first position detection section at the fingertips of the fingers targeted for position detection by the first position detection section. Therefore, a higher degree of freedom can be provided for the fingertips targeted for position detection than in a case where the first position detection section is provided in correspondence with the fingertips of the fingers targeted for position detection.

[3] The operation device described in [1] or [2] above may be configured such that the stimulus generation section includes the vibration generation section, which is disposed on the mounting section, positioned between the first and second joints of the user's fingers, and configured to generate a vibration.

In a case where the vibration is generated by the vibration generation section positioned as described above, the configuration described above makes it possible to transmit the vibration to the fingertips and give the same illusion to the user as in the case of direct vibration of the fingertips. This eliminates the necessity of providing the vibration generation section at the fingertips. Therefore, a higher degree of freedom can be provided for the fingertips than in a case where the vibration generation section is disposed at the fingertips.

[4] The operation device described in any one of [1] to [3] above may include the proximity detection section, which is disposed on the mounting section, positioned on a ball side of the user's fingertips, and configured to detect the proximity of an object.

Since the proximity detection section for detecting the proximity of an object is disposed on the ball side of the fingertips, the configuration described above enables the proximity detection section to accurately detect the proximity of an object relative to the user's fingertips.

[5] The operation device described in any one of [1] to [4] above may be configured such that the stimulus generation section includes the temperature adjustment section, which is able to adjust the temperature.

The configuration described above makes it possible to give the user a cool sensation and a warm sensation. Consequently, the versatility of the operation device can be increased, so that the user operating the operation device is able to perceive the temperature indicative of contact between the operation target, which is operated by the operation device, and another user or an object.

[6] The operation device described in any one of [1] to [5] above may be configured such that the stimulus generation section includes the pressing section, which presses the user's hand and fingers.

The configuration described above enables the pressing section to apply a reaction force to the user when the user grasps an object, and give the user a tactile sensation as if the user's hand is touched by another person. Consequently, the versatility of the operation device can be increased.

above may include the second position detection section, which is disposed on the mounting section, placed at a position corresponding to a back of the user's hand, and configured to detect a position of the back of the hand.

The configuration described above enables the second position detection section to detect the movement of turning the user's wrist. Consequently, the user's hand movements can be detected in detail.

[8] The operation device described in any one of [1] to [7] above may be configured such that the mounting section is shaped like a glove that is worn on the user's hand and fingers.

The configuration described above ensures that the operation device can easily be worn on the user's hand.

[9] The operation device described in any one of [1] to [8] above may be configured such that the first position detection section includes the magnetic sensor, which detects an externally generated magnetic field.

The configuration described above makes it possible to detect the positions of the fingers without interfering with the movement of the fingers compared to the case where, for example, the first position detection section includes an exoskeleton attached to the fingers and a movement amount detection device configured to detect the amount of movement of the exoskeleton.

[10] The operation device described in any one of [1] to [9] above may include the control section, which is disposed on the mounting section, placed at a position corresponding to the user's wrist, and configured to control the stimulus generation section.

The configuration described above makes it possible to dispose the control section at a position where hand movements are unlikely to be interfered with. This suppresses a decrease in the degree of freedom of the user's hand and fingers.

[11] The operation system includes the operation device described in any one of [1] to [10] above and the operation target configured to operate according to operation information based on the result of detection by the first position detection section.

The configuration described above makes it possible to provide the same advantages as those of the above-described operation device. Consequently, this makes it possible to configure the operation system such that the operation target can be operated by the operation device, and that a stimulus externally applied to the operation target can be fed back to the user.

### [Reference Signs List]

1: Operation system
2: Puppet main body (operation target)
3: Control device
4: Communication device
5: Magnetic field generation device
6, 7: Operation device
61: Mounting section
62: Position/posture detection section
621: First position detection section
6211 to 6215: First position detection section
622: Second position detection section
63: Proximity detection section
64, 64A: Stimulus generation section
65: Vibration generation section
651 to 655: Vibration generation section
66: Temperature adjustment section
67: Pressing section
68: Control section
71: Reaction force generation section
711 to 715: Reaction force generation section
72: Link mechanism
73: Resistance section
BH: Back of hand
F: Finger
PP: Puppet

## Claims

1. An operation device comprising:
a mounting section that is attached to a hand and fingers of a user;
a first position detection section that is disposed on the mounting section to detect positions of the fingers; and
a stimulus generation section that is disposed on the mounting section, placed at a position corresponding to one of the user's fingers, and configured to apply an external stimulus to the user.

2. The operation device according to claim 1,
wherein the first position detection section is disposed on the mounting section and positioned on a nail side of the user's fingertips.

3. The operation device according to claim 1 or 2,
wherein the stimulus generation section includes a vibration generation section that is disposed on the mounting section, positioned between the first and second joints of the user's fingers, and configured to generate a vibration.

4. The operation device according to any one of claims 1 to 3, further comprising:
a proximity detection section that is disposed on the mounting section, positioned on a ball side of the user's fingertips,
and configured to detect proximity of an object.

5. The operation device according to any one of claims 1 to 4,
wherein the stimulus generation section includes a temperature adjustment section that is able to adjust a temperature.

6. The operation device according to any one of claims 1 to 5, wherein the stimulus generation section includes a pressing section that presses the hand and fingers.

7. The operation device according to any one of claims 1 to 6, further comprising:
a second position detection section that is disposed on the mounting section, placed at a position corresponding to a back of the user's hand, and configured to detect a position of the back of the hand.

8. The operation device according to any one of claims 1 to 7,
wherein the mounting section is shaped like a glove that is worn on the user's hand and fingers.

9. The operation device according to any one of claims 1 to 8,
wherein the first position detection section includes a magnetic sensor that detects an externally generated magnetic field.

10. The operation device according to any one of claims 1 to 9, further comprising:
a control position that is disposed on the mounting section, placed at a position corresponding to the wrist of the user, and configured to control the stimulus generation section.

11. An operation system comprising:
the operation device according to any one of claims 1 to 10; and
an operation target that operates according to operation information based on a result of detection by the first position detection section.
